Europäisches Patentamt

European Patent Office

Office européen des brevets

(11) Publication number: **0 356 200**
**A1**

## EUROPEAN PATENT APPLICATION

(21) Application number: 89308498.8

(22) Date of filing: 22.08.89

(51) Int. Cl.5: **H 04 N 7/167**
**H 04 K 1/00**

(30) Priority: 24.08.88 GB 8820103

(43) Date of publication of application:
28.02.90 Bulletin 90/09

(84) Designated Contracting States:
DE ES FR GB IT NL SE

(71) Applicant: SCREEN ELECTRONICS LIMITED
The Old Rectory Church Lane
Claydon Suffolk IP6 0EQ (GB)

(72) Inventor: Atkin, Laurence Walter
The Old Rectory Church Lane
Claydon Suffolk IP6 0EQ (GB)

(74) Representative: Dummett, Thomas Ian Peter et al
Dummett Copp & Co. 14 The Square
Martlesham Heath Ipswich Suffolk, IP5 7SL (GB)

(54) Video scrambling system.

(57) The present invention relates to a device and method for scrambling electronic signals comprising a series of data units in a specified sequence within the signal, in which the data units are handled as data packets corresponding to the whole of the data portion of each signal and the sequence of data packets is scrambled without scrambling the sequence of the data units within each data packet. In a television picture transmission, this correspond to shuffling the lines of the picture vertically as opposed to shuffling the data units horizontally within each line as hitherto.

Fig. 1

**Description**

<div align="center">

## DEVICE AND METHOD

</div>

The present invention relates to a device, notably to a device for scrambling or encrypting transmitted data, and to a method for scrambling or encrypting data.

BACKGROUND TO THE INVENTION:

Many forms of data are transmitted from a source to a receiver, for example video and audio signals in a television broadcast system. It is often desired that the data be protected against access by unauthorised reception by encrypting or scrambling the data at the transmitter so that a suitable de-coder is required by the recipient. For example, it is common practice to scramble the video signals of a television transmission so that the picture being transmitted can only be viewed by users having the appropriate de-coder and upon payment of the appropriate fee. For convenience, the term scramble will be used herein to denote operations which both encrypt the signal and shuffle parts thereof with respect to one another as well as operations which merely shuffle the sequence of parts of the signal relative to one another. The term will also be used to denote the scrambling which occurs to a signal prior to transmission and the un-scrambling of that signal at the receiver, since the one is essentially the reverse of the other.

Typically, a transmitted signal comprises a synchronisation portion followed by an information portion, which may be in digital or analog form. In the case of a video signal, it has been proposed to scrambled this by shuffling the order of data relating to pixels within any one horizontal of the image to be transmitted. An example of such a system is that described in GB 1590579 B, in which the sequence of picture points within the information part of each line of the signal is shuffled as it is fed into a random access memory (RAM) store, the scrambling being controlled by a read only memory (ROM) which has been programmed with the desired memory location addressing sequence.

Another similar system is described in USP 4070693 which uses two memories operated in parallel with one another into which the digitised data corresponding to the picture points in separate single lines of the screen image is fed alternately. Whilst data is being read out from the first memory location, data for a second line of the image is being fed into the other memory. The data relating to the information portion of the line of the signal is read out from each memory cyclically starting at some intermediate point in the memory selected randomly for each scan of the memory, so that the data for each line has its first section transmitted after a second section, ie. with the data in the correct order in each section, but with the sections transposed in sequence. Again, the data relating to the picture points in each line is shuffled, but it requires the use of two memories operated in parallel.

It has been proposed in European Patent No 0046790 to break the information portion of each line of the signal into a larger number of randomly sized data units and to read these off in a random order which is repeatedly changed so that there is less chance of any pattern in the transmitted data being established. In this system the line data is fed into a first memory location and then all that data is simultaneously transmitted into a second memory location, from which it is read off for transmission. The identification of the separate data units and the shuffling of the order in which they are read can occur either before, during or after the simultaneous transmission of the data units in parallel from the first to the second memory location.

It has also been proposed in US Patent 4731839 to convert an analog signal to a digital signal, to select a start point within the digital signal for each line at random and to read the signal backwards for the portions lying to either side of that start point so as to arrive at a signal for each line which has its data inverted in two or more portions. By varying the start point for inverting the signal data, the scrambling of the signal is varied for each line.

With the above systems, problems arise in that not only is the circuitry required to scramble the data and then re-assemble the original picture from the scrambled data complex, but the re-assembled picture quality is reduced as compared to the original. This is due to the fact that during transmission of the scrambled data there may be a measure of distortion, for example, base line tilt, noise or other distortion, during the scan of each line. As a result, when the signal is un-scrambled, discontinuities are introduced into the signal at virtually every junction between each point at which the original line was sampled. The existence of this problem has long been recognised in the industry, but no entirely satisfactory solution has been proposed. Despite the above problems, horizontal scrambling of picture point data within each line is still an accepted route for scrambling television images and is used in the newly introduced MAC television transmission systems.

We have now devised a system for scrambling data for transmission which reduces the problems encountered with previous proposals by handling the sampled data for the lines of the image in the same sequence within a line at all times and achieving scrambling of the image by scrambling whole or part lines in relation to one another. Thus, for a television transmission, the scrambling is achieved vertically rather than horizontally and problems due to line tilt and other distortion when re-assembling the scrambled image are reduced. Such an approach also has benefits where an audio signal is to be transmitted with the video signal.

SUMMARY OF THE INVENTION:

Accordingly, the present invention provides a method for scrambling an input series of electronic signals at least some, and preferably each, comprising a synchronisation portion and a data portion comprising a series of data units in a required sequence, which method comprises the steps of:

    a. where the data portion is in analog form, preferably converting that portion to a digital signal comprising a series of data units in a sequence;

    b. feeding a data packet to an individually addressable location in a memory unit, where the addressable location is a group of one or more memory cells matching the size of the packet, said data packet comprising the data units relating to part or all of one or more of said data portions , the data units being in the sequence in which they appear in the individual data portions in the input signal ;

    c. feeding another data packet containing the data units relating to part or all of another one or more of said data portions in the sequence in which they appear in the individual data portions in the input signal to another location in the memory unit;

    d. reading data packets from the memory unit in a sequence other than that in which they were read into the memory unit;

    e. preferably, sequentially transferring the read packets to a buffer memory, the buffer memory preferably having a capacity at least sufficient to hold the data units read out from a location in the memory;

    f. discharging individual data units from the memory unit or from the buffer memory serially to assemble a scrambled version of the input signal in which the sequence of the data packets in the signal has been scrambled but in which the sequence of data units within those data packets has been retained.

The above process is applied is a repeating sequence throughout the transmission of the input signal and is applied either to scramble a signal for transmission or to un-scramble a scrambled input signal.

The present invention can be applied to the scrambling or un-scrambling of a wide range of types of signal. However, the invention is of especial application in the scrambling of television image transmissions, and the invention will for convenience be described hereinafter in terms of this preferred use.

The term data packet is used herein to denote either a single data unit relating to a single sample (a picture sample), eg. of the luminance/chrominance wave form defining the picture information data within a single line of a colour television signal; the picture data relating to one or more whole lines of a field of an image; or other sized discrete blocks of data units into which it is desired to break down the input signal. In a data transmission, this could be for example the individual data portions of the input signals. Thus, in the preferred use, each data packet could be a portion or the whole of the signal for a line of each field of the video information, or could be two or more whole lines of that field. The invention is characterised in that the blocks in the scrambled signal retain the data units in the same sequence in which they are present in those blocks in the input signal.

It will be appreciated that where a data packet contains more than one data unit, all data packets being handled in the method of the invention will preferably contain the same number of data units. Preferably, each data packet contains all the data units relating to the picture samples in a single line of a field of the picture or other image to be transmitted.

For convenience, the invention will be described hereinafter in terms of the scrambling of data packets which contain the video information for a single line of a PAL television image transmission. The invention can be applied to other television transmission systems, notably to NTSC or SECAM systems, in substantially the manner described below. It is also preferred that the synchronisation pulse and colour sub-carrier burst initial portion of each line signal should not be scrambled in the method of the invention, but should by pass the scrambling operation and be re-assembled with the scrambled signal prior to transmission. For convenience, the invention will be described in terms of scrambling only the picture data portion of the input signal.

In the method of the invention, the data packets of data units are processed as discrete units and the data within them is not shuffled so that the sequence of the picture samples in the input signal for each discrete line signal is retained. The image is scrambled by shuffling the relative sequence of the lines of the field or frame to be transmitted. Thus, the data packets are scrambled amongst themselves and where the packets constitute only part of a line, they are handled sequentially, thus retaining the sequence within the overall line signal. In this way the problem of re-assembling an image from a scrambled signal which has undergone distortion is reduced and image quality is improved.

In a particularly preferred method of operation, data packets each corresponding to a single line of a field of a television image are fed in a first sequence to individually addressable row locations in a memory; data packets are read off from the row locations in a second sequence different the first sequence, preferably all the data units in a data packet from a songle row address are read out simultaneously; the read out data packets are fed in that second sequence to a serial shift register from which individual data units are discharged in the sequence in which they were present in the relevant data packet; further signal data packets are fed in said first or another sequence to any remaining unoccupied locations in the memory unit until the memory unit is full and then are fed in said second or another sequence to the locations from which previous data packets are transferred from the memory unit.

Thus, from a particularly preferred aspect, the invention provides a method for scrambling a series signals which are analog television signals and comprise a portion containing vertical and horizontal synchronisation information and colour sub-carrier burst information relating to the signal being transmitted and a data portion defining the chrominance and luminance of the image along a horizontal line of the image being transmitted; the method comprising establishing a series of timing signals from the synchronisation and/or sub-carrier portion of the signal; converting the data portion of the signal to a series of digital data samples; passing data packets each containing the digital data samples relating to a horizontal line of the image being transmitted sequentially to selected row addresses in a RAM, the row address for each data packet being selected by a logic circuit or memory operated by the timing signals and the horizontal synchronization information for that line of the image; simultaneously transferring at least part of at least one data packet from a row address in the RAM into a shift register from which the digital data samples contained in the transferred data packet(s) are discharged under the control of the timing signals to provide a signal wherein the sequence of at least some of the lines of the image has been scrambled but the sequence of the digital data samples within each line is substantially unaltered from that in the input signal.

Preferably, the memory unit has at least sufficient addressable locations to receive the data packets relating to an eighth to a quarter of the field to be scrambled; and preferably has a capacity up to 10% greater than this minimum value to permit selection of new locations for at least some of the new data packets once a whole section of the field has been fed to the memory unit. It is also preferred that the shift register form an integral part of the memory unit and has a capacity to hold the data units from at least one whole row address.

In a particularly preferred embodiment of the invention, the memory unit is a static or dynamic RAM, notably a dual port Video-RAM, which comprises a random access memory array and a serial shift register so that rows of individual locations within the memory can be addressed using both x and y co-ordinates according to an external address selection system activated by the input signal, each location holding typically 8 bits of signal information, but could hold say 4 or 16 bits. The stored data packets are transferred out of the memory unit a row at a time into the shift register, which forms an integral part of the Video-RAM.

The memory unit may have sufficient capacity to hold all the data packets relating to a whole field or frame to be scrambled. However, it may be desirable from economic grounds to use a memory unit which can hold only an eighth, quarter or half of the whole field or frame, either vertically or horizontally, and to use two or more of those smaller memory units in parallel. In this case it may be desired to hold the incoming signal in a small second buffer memory to accommodate the small delays which may occur in transferring the data packages from the row addresses into the shift register.

In order to improve yet further the extent of scrambling of the input signal and to reduce the ease of detecting any pattern in the transmitted signal, it may be desired to scramble the input signal before it is fed to the memory unit, for example by feeding data packets to the addressable locations in a sequence different from that in the original incoming signal and/or by varying the sequence of reading the addressable locations in a random manner for each field or frame being operated on. This pre- or post scrambling can conveniently be carried out using the method of the invention so that the input signal is subjected to a two or three stage scrambling without altering the sequence of the picture sample unit data within an overall line.

The term input signal is therefore used herein to denote the signal having the sequence of data units as fed to the memory unit of the method of the invention after any pre-scrambling.

The scrambling of the input signal is achieved by random selection of the addresses in the memory unit into which and/or from which the data packets of the signal are read. Since, as stated above, the input signal is to be scrambled by altering the relationship of whole lines within the signal, the address in the case of a dynamic RAM memory unit is selected according to one of the column or row addresses, not both. However, where a Video-RAM is used as the memory unit, this operates by transferring a row of data at a time into its integral shift ragister, and the address locations are therefore selected only as rows.

The random selection is conveniently achieved by means of a look up table or similar memory unit which carries the addresses in a fixed sequence which is read sequentially for each input or removal of a data packet to the memory unit. Alternatively, where it is desired that the sequence is varied, the address can be selected by a read/write memory unit or a logic circuit operating, for example, in response to a coding portion of the incoming signal.

The operation of the method of the invention requires the synchronisation of the reading of data packets to and from the memory unit with the address selection. This is conveniently achieved by means of a timer circuit in response to the frequency of the initial colour sub-carrier burst of the input signal to provide a sampling clock in phase with the cycle of the sub-carrier chrominance wave(s) imposed upon the luminance carrier wave of the video signal. The sampling clock will preferably have a frequency of from 2 to 3 times the frequency of the initial colour sub-carrier burst and will be phased locked thereto. The colour sub-carrier burst in the PAL system has a standard frequency of 4.433619 MHz. The sampling clock pulses can be generated by any suitable oscillator circuit phase locked to the sub-carrier burst.

We have found that the scrambling method of the invention lends itself particularly suitably to the transmission of audio signals. If the original audio signal for a video field is digitised and compressed to occupy the time of a single video line, we have found that this compressed audio signal has a frequency close to the video band width and can be handled in the scrambling method of the invention as if it were a video line. This greatly facilitates its transmission and handling without the need for significant extra cicuitry.

The initial audio signal is digitised and sampled, preferably at a rate corresponding to 2 samples per video line, for example 30 kHz. The samples are read into two shift registers in parallel, each having sufficient capacity to hold the audio samples corresponding to the whole video field. Preferably, the audio samples have between 4 and 16 bits, notably 8 bits. It may be desired to compand the signal using conventional techniques before or after digitisation to economise on the amount of data to be handled, notably where the samples each contain 8 to 16 bits. When one shift register is full, the audio samples for the next video field are fed into the second shift register. The samples are read out of the full shift register at at least the rate required to compress the samples into a single video line. This would require a read out rate at least $312^1/_2$ times the read in rate, and in practice a read out rate of about 385 times the read in rate is used.

The compressed audio signal can be fed into any suitable row or rows in the memory unit used for the video signals as if it were a video signal. Typically, the compressed audio signal will be fed into the memory unit without scrambling. However, the compressed audio signal can be incorporated into the start or finish of the field of its appropriate video field and scrambled using the method of the invention. Where it has not been scrambled, the compressed audio signal is fed into any suitable address in the memory unit either in place of a blank video line or in place of one or more of the video lines at the start or end of a video field.

The data from the compressed audio signal is copied into a shift register associated with the memory unit once for every video line read out of the memory unit. The compressed audio signal is read out of the shift register progressively 2 bytes at a time for each video line read out of the memory unit. The audio signals are read into another 2 byte shift register from which they are clocked out at the inverse of the compression factor originally to provide a re-assembled audio signal. Where a Video-RAM is used as the memory unit for the video signals, the compressed audio signal is copied into the shift register of the Video-RAM for each video line read out of the RAM and a horizontal counter selects the first two bytes of the audio signal at the read out of the shift register. The Video-RAM thus sequentially clocks the compressed audio signal out of the RAM in synchrony with the video signals of the field to which the audio signal relates.

The invention also provides a device for scrambling electronic signals comprising:

a. optional means for converting the signals from an analog to a digital form;

b. means for identifying individual portions of the input signal as discrete data packets comprising one or more data units;

c. means for feeding those data packets in a first sequence to a memory unit having individually addressable locations each adapted to receive part or all of a data packet whilst retaining the sequence of the individual data units within each data packet;

d. means for generating a second sequence for reading data packets into and/or from the memory unit in a sequence which differs from the said first sequence;

e. means for discharging individual data units in the sequence in which they are contained in the data packets; and

f. means for continuing to feed data packets to locations in the memory unit from which previous data packets are read out, thus varying the sequence in which the said packets are read out from the said memory from the initial signal sequence whilst retaining the sequence of the data units within those data packets.

Preferably, the memory unit has associated therewith a buffer memory or shift register adapted to receive data packets read out from the memory unit and adapted to transfer the data units therein sequentially to the discharge means.

The method and device of the invention may be used to operate on the whole field of the incoming signal. However, it may be desired that portions of the signal, for example the line and field blanking periods and the synchronisation pulse and colour sub-carrier burst at the start of each line signal, be transmitted without scrambling. These can by pass the scrambling according to the invention using conventional circuitry triggered by the synchronisation portion of the signal.

## DESCRIPTION OF THE DRAWINGS:

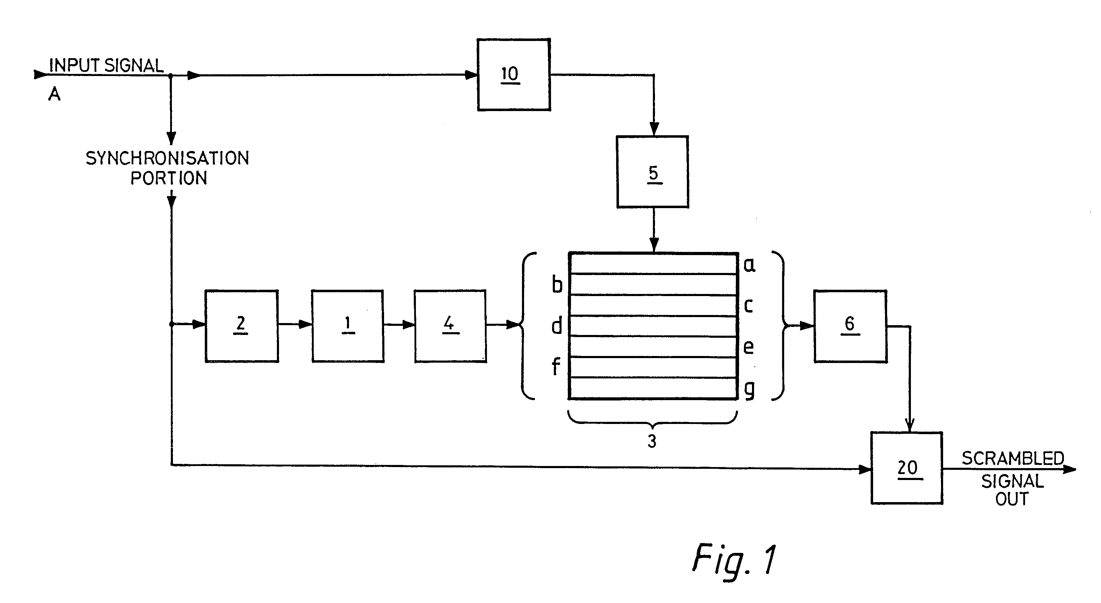

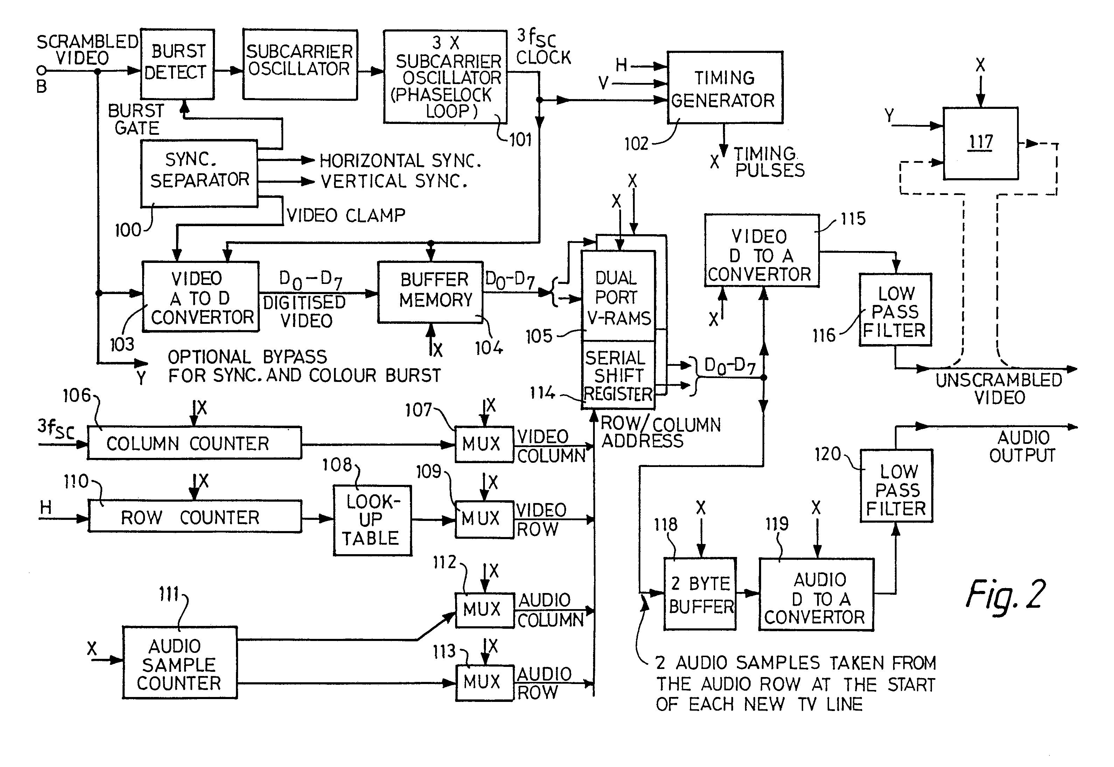

For convenience, the invention will be described by way of illustration only with reference to a preferred embodiment as shown in the accompanying drawings in which Figure 1 is a diagrammatic block component diagram illustrating the operating principles for a signal scrambling device for use in the method of the invention; and Figure 2 is a diagrammatic circuit block diagram of a signal unscrambling device for use in the method of the invention.

## DESCRIPTION OF A PREFERRED EMBODIMENT:

The signal scrambling device of Figure 1 comprises a signal input point A into which a video input signal is fed. The signal comprises a series of line information signals, each comprising, as is conventional, a line blanking portion comprising an initial synchronisation pulse and a colour sub-carrier burst having a frequency ($f_{sc}$) of approximately 4.433619 MHz. This line blanking portion is followed by the active line portion or data portion of the signal comprising a chrominance data sub-carrier wave imposed upon a luminance wave defining the brightness across the image at that line level. Such a signal is typical of the line signals transmitted in the PAL system. The image being transmitted consists of a series, usually $312^1/_2$, of such lines to form a field of the image being transmitted. This is followed by a synchronisation pulse to indicate the start of a second field of lines alternating with those of the first field to complete the image or frame being transmitted.

As described above, there may also be an audio signal associated with the video field and this is treated as described above and will not be further described here.

Where the input signal is in analog form, it is preferred to digitise the data portion of the input signal in a conventional analog to digital converter 10. This can provide separate digitised outputs for each of the red, yellow and green components of the signal, but this would require duplication of many of the circuits required for the scrambling operation, and it is prferred to digitise the combined colour information to provide a single digital output for scrambling.

As is conventional, the digitisation provides a number of digital picture samples, typically taken at a frequency of 3 times the frequency of the colour sub-carrier wave and each sample containing 8 bits, defining the amplitude and composition of the composite chrominance/luminance wave being sampled at that point. These are the data units referred to above. The digitised signal to be scrambled typically contains about 670 data units where a whole line is contained in a single data packet.

The scrambling device of Figure 1 comprises a control logic and ROM circuit 1 containing address sequence coding which is synchronised with the data of the input signal by a clock circuit 2 initiated by the synchronisation portion and the sub-carrier frequency of the input signal. The synchronisation and colour sub-carrier burst portion of the input signal preferably by passes the remainder of the scrambling circuit and is married with the scrambled output from the circuit for transmission to a receiver, not shown. The control logic circuit also controls the operation of the main memory unit described below, ie. read, write, etc.

The ROM ascribes each data packet an address for a location in the main memory unit 3, which is preferably a dynamic RAM, notably a dual port Video-RAM.

The memory unit 3, eg. the Video-RAM, typically comprises an array of storage cells organised such that a number of cells, typically four or eight cells, can be addressed simultaneously according to their x (row) and y (column) location. Where memory units having less than the desired number of cells at a location are used, eg. for the sake of economy, two or more smaller memory units can be used in parallel with the data for a given address being shared simultaneously between them.

It may also be necessary for a data packet to span two or more rows of the cells in order to avoid excessive costs in providing sufficiently large row capacity to store a whole line in a single row or part of a row, in which case the addressable location in the memory unit will comprise two or more rows. Similarly, it will also usually be preferred to use a memory unit with a capacity to store from a quarter to one half of the total field data packets at one time to avoid excessive memory costs.

Since the change of row address and the shift of data from the memory unit to permit further data to be read into the vacated row addresses may involve a small delay, it will usually be preferred to provide a small buffer memory 5 to store part of the string of data packets being read into the memory unit to accommodate those delays.

However, for convenience, the invention will be described in terms of a V-RAM with sufficient capacity to store all the data from a data unit at a single cell address, to store all the data packets for the whole of a line of the field at a single row address, and with sufficient row addresses to store all the data packets for the whole of the field of the image. Furthermore, the invention will be described in terms of ascribing data packets to a row address, ie. all the data packets for a line are fed to a single x address. However, it will be appreciated that with a dynamic RAM as opposed to a Video-RAM, the data packets could be ascribed a column address, ie. a single y address, rather than a row address.

As stated above, the ROM ascribes a cell address to each data unit or series of data units forming a data packet. Since the data units for each individual line of the field of the input signal are to be handled as a discrete group, the data units are read in sequence into each selected row, but the ROM scrambles the signal by ascribing different groups of data packets (ie. lines of the field) to different row addresses. That is, the data packets in a data packet for a given line are read in sequence into a selected row; the next data packet or line is read into a different selected row, which need not be that adjacent to the first; and so on. To reduce the number of pin connections at the V-RAM, the address coding is combined in a multiplexer 4 so that the co-ordinates are fed sequentially to the V-RAM.

In the case shown, the V-RAM has a capacity to receive 8 bits at each addressable cell location and is to receive an input signal which has been sub-divided into 5 lines. The data packets for each line are fed sequentially to rows a, b, c, d and e. The next input signal will feed packets into rows f and g and will then feed the data packets for the remaining three lines into the next three rows vacated as the data packets for the first three rows of the first line are read out of the V-RAM as described below.

At this stage, the data packets are held in the V-RAM in the sequence in which they were present in the input signal and the individual data units, for example picture samples, are retained in the sequence present in the input signal. The data packets are then read out of the addresses in the V-RAM in a different sequence to that in which they were read in but without shuffling the sequence of the data units within each packet. The order of reading out is selected by the ROM 1 and could be, for example, b, d, a, c then e to give a scrambled output from the V-RAM.

As the data packets are transferred out of the addressed cell locations in the RAM component of the V-RAM, they leave vacant cell locations into which new packets can be read from the buffer memory 5. Thus, in the example quoted above, the next three packets from the partially inputted second signal will be read into addresses b, d, and a. The first two of the following signal will be read into c and then e. This gives an input series of a, b, c, d, e, f, g, b, d and e with an out put sequence of b, d, a, c, ... with the read out sequence becoming progressively more scrambled with respect to the input sequence as the read in/read out sequences become more out of register with one another.

It will be appreciated that the scrambling of the lines could be achieved when reading the data in to the memory unit 3 in place of or in addition to reading the data out of the memory as described above.

The data packets are transferred from the RAM component of the memory unit into a serial shift register 6. This may be an integral component of the memory unit , as when a V- RAM is used, may be a separate component or could be a component of the digital to analog converter described below. For convenience, the invention will be described in terms of a Video-RAM. This shift register holds only some of the data packets, preferably only one of the data packets, and serves to ensure that although the data units in the data package are read out of the RAM in parallel, they are then read out of the register 6 sequentially so as to be in a form suitable for processing in a digital to analog converter or for onward transmission.

The individual data units in the data packet in register 6 are still in the sequence in which they were present in the input signal. Thus, although the sequence of the data packets has been shuffled, the picture sample data sequence for each line has not been altered and can be read out directly from register 6. This overcomes the problems in re-assembling scrambled lines present in earlier systems.

The scrambled data packets are fed to a digital to analog converter 20 where they are re-combined with the synchronisation and sub-carrier burst portion of the input signal which has by passed the scrambling process. The scrambled signal is then fed to a transmitter for transmission using conventional techniques to a suitable receiver where the scrambled signal is treated in the reverse order to unscramble the signal.

As indicated above, the output from the V-RAM can be fed to a further scrambling system, preferably one of the invention, to further scramble or encrypt the output signal before it is transmitted; and the address selection in the RAM can be controlled by a read/write memory in place of the ROM described above so as to vary the reading in and/or reading out sequences.

In the operation described above, the data packets correspond to the whole picture sample data for a whole line of the image. However, this need not be the case and a data packet could contain the picture samples for a third or a half of a line; or could contain the picture samples for two or more lines of the image to be scrambled. In all cases the sequence of the picture samples is preserved within each data packet.

Figure 2 describes a preferred form of a signal de-scrambling circuit for use in the present invention. Such a circuit can be used in substantially the form shown for scrambling an input signal as described above.

The scrambled input signal enters at point B, optionally after amplification in the conventional manner. The synchronisation portion of the signal actuates a synchronisation separation circuit 100, which can be of conventional design and construction, which generates pulses corresponding to the horizontal and vertical synchronisation timing as well as other pulses for the video clamping and the burst gating in response to the synchronisation portion at the start of each line of the input signal.

The colour sub-carrier burst portion of the input signal is used to generate a timing pulse signal ($3 f_{sc}$) at 3 times the frequency of the sub-carrier wave using a conventional phase locked oscillator circuit 101. The vertical and horizontal synchronisation pulses from circuit 100 and the $3 f_{sc}$ pulses from circuit 101 are fed to a timing pulse generator circuit 102 to provide timing control pulses X for the operation of the system.

The video portion of the input signal is fed to a conventional analog to digital signal conversion circuit 103 where it is sampled at a frequency $3f_{sc}$ to give a series of 8 bit digital picture samples, $D_0$ to $D_7$, each of which constitutes a data unit and the group of those data units corresponding to a line of the input signal forming a data packet.

A compressed audio signal, as described above is contained as a separate line or lines within the line signals for a video field at a known line number or numbers within the field and is processed as if it were a video signal except as described below.

The synchronisation and colour sub-carrier burst portion for each input line signal Y is preferably fed to a by pass circuit, 117, for re-combination with the un-scrambled output signal, since there is usually no need to scramble or un-scramble this portion of the video signal.

The digital signals from circuit 103 are fed to a conventional first in first buffer memory 104 through which they are clocked at $3 f_{sc}$ under the control of timer pulses X into dual port Video-RAM 105. Each data packet is given a row address in the RAM. The row address is the same for the whole of the data packet and the data units are counted into successive cells along that row address by a column counter 106 at $3 f_{sc}$ and gate 107 under the control of timer pulses X. The row address for each successive data packet or line is selected by a ROM look up table 108 and gate 109 operated under the control of a row counter 110 operated by the horizontal synchronisation pulse H from circuit 100 and the timer pulses X. The ROM 108 has a fixed sequence of row addresses to correspond with the scrambling sequence described above. Alternatively, the ROM can be replaced by a read/write memory where it is desired to vary the sequences for each cycle under the influence of an encryption signal, typically contained in the field blanking portion of the input signal, using conventional technology and circuitry.

The compressed audio signal occupies a line or lines within the video signal being transmitted and is read into a row in the Video-RAM as if it were a video line as explained above .

The Video-RAM is preferably a dual port RAM as described above for the scrambling circuit and incorporates a shift register 114 into which the data packets are transferred in the same manner as for the shift register in the read out stage of the scrambling circuit described above. The data units are read out from register 114 in sequence to a conventional digital to analog converter 115 operated under the control of the timer pulses X from circuit 102. The output from the converter 115 is the unscrambled video signal corresponding to the input signal before scrambling. It will usually be preferred to pass the un-scrambled signal through a conventional low pass filter 116 to remove high frequency components as is conventional. Where the synchronisation and sub-carrier burst portion of the line signal has by passed the un-scrambling circuit as stated above, this can be combined with the un-scrambled signals in a conventional multiplexer 117.

As described above, the compressed audio signal is transferred progressively from the row or rows it occupies in RAM 105 by copying the lines into the shift register 106. The counter 111 and gates 112 and 113 cause the order of the audio signal data units to rotate by 2 bytes at a time so that successive two byte units are read out into the two byte buffer 118. These are clocked out from buffer 118 at the start of each video line at their original sampling frequency rate to return the audio signals to their uncompressed form, passed through a conventional digital to analog converter 119, passed through a low pass filter 120 and then used to provide the audio signal to accompany the video signal.

The above circuits can readily be constructed from conventional electronic components and operated using conventional techniques, thus rendering the invention economic and simple to apply to the scrambling and unscrambling of a wide range of types of signal. As indicated above, the compression of the audio signal so that it has a frequency within the video band width provides a particularly advantageous method for handling the of the audio signal without the need for significant extra circuits as hitherto.

**Claims**

1. A method for scrambling or unscrambling an input series of electronic signals at least some of which comprise a synchronisation portion and a data portion containing a series of data units in a required sequence, which method is characterised in that it comprises the steps of:

a. where the signal is in analog form, preferably converting that portion containing the data units into a digital signal comprising a series of data units in a sequence;

b. feeding a data packet containing the said data units relating to at least part of at least one of said data portions in the sequence in which they appear in that data portion in the input signal to an individually addressable location a-g in a memory unit 3, 105, where the addressable location a-g is a group of one or more memory cells and is of a size to receive the data packet;

c. feeding another data packet containing the data units relating to at least part of at least one other of said data portions in the sequence in which they appear in that data portion in the input signal to another location in the memory unit 3, 105;

d. reading data packets out from the memory unit 3, 105 in a sequence other than that in which they were read into the memory unit 3, 105; and

e. discharging individual data units from the memory unit 3, 105 serially to assemble a scrambled version of the input signal in which the sequence of the data packets in the signal has been scrambled but in which the sequence of data units within those data packets has been retained.

2. A method as claimed in claim 1 characterised in that the signals are television video signals and the data packets each correspond to the data portion of at least one line of the signal being transmitted;

3. A method as claimed in either of claims 1 or 2 characterised in that the data packets are read out in sequence from the memory unit 3, 105 into a buffer memory 6, 114 from which the data units are discharged serially.

4. A method as claimed in any one of the preceding claims characterised in that the memory unit 3, 105 comprises a RAM 105 and a serial shift register 114 is provided as the buffer memory into which the data packets are read out from the memory unit.

5. A method as claimed in any one of the preceding claims characterised in that the memory unit 3, 105 is a dual port Video-RAM 105 incorporating a shift register 114 into which the data units at a row address are transferred simultaneously.

6. A method as claimed in any one of the preceding claims characterised in that a second buffer memory 5, 104, preferably a shift register, provided on the input to a Video-RAM 105 acting as the memory unit 3, 105 to accommodate delays in processing the data packets through the Video-RAM 105.

7. A method as claimed in claim 1 wherein an audio portion of the input signal is compressed so that it has a frequency within the video band width, the compressed signal is read into the memory unit 3, 105 as if it were a data packet and is progressively read out of the memory unit 3, 105 as successive portions into a buffer memory 118 from which it is read out sequentially at a rate which removes the compression of the signal.

8. A method for scrambling a series signals which are analog television signals and comprise a portion containing vertical and horizontal synchronisation information and colour subcarrier burst information relating to the signal being transmitted and a data portion defining the chrominance and luminance of the image along a horizontal line of the image being transmitted; characterised in that the method comprises establishing a series of timing signals from the synchronisation and/or sub-carrier portion of the signal; converting the data portion of the signal to a series of digital data samples; passing data packets each containing the digital data samples relating to a part or all of one or more horizontal lines of the image being transmitted sequentially to selected row addresses a-g in a RAM 105, the row address a-g for each data packet being selected by a logic circuit or memory 108 operated by the timing signals and the horizontal synchronization information for that line of the image; simultaneously transferring at least part of at least one data packet from a row address a-g in the RAM 105 into a shift register 114 from which the digital data samples contained in the transferred data packet(s) are discharged under the control of the timing signals to provide a signal wherein the sequence of at least some of the lines of the image has been scrambled but the sequence of the digital data samples within each line is substantially unaltered from that in the input signal.

9. A device for scrambling electronic signals characterised in that it comprises:

a. optional means 103 for converting the signals from an analog to a digital form;

b. means 100, 101, 102, 103 for identifying individual portions of the input signal as discrete data packets comprising one or more data units;

c. means 103, 104 for feeding those data packets in a first sequence to a memory unit 3, 105 having individually addressable locations a-g each adapted to receive part or all of a data packet whilst retaining the sequence of the individual data units within each data packet;

d. means 106, 107, 110, 111, 108, 109 for generating a second sequence for reading data packets into and/or from the memory unit 3, 105 in a sequence which differs from the said first sequence;

e. means 6, 20, 114, 115, 116, 117 for discharging individual data units in the sequence in which they are contained in the data packets; and

f. means A, B for continuing to feed data packets to locations a-g in the memory unit 3, 105 from which previous data packets are read out, thus varying the sequence in which the said packets are read out from the said memory unit 3, 105 from the initial signal sequence whilst retaining the sequence of the data units within those data packets.

10. A device as claimed in claim 9 characterised in that the memory unit 3, 105 has associated therewith a buffer memory 6, 114 adapted to receive data packets read out from the memory unit and adapted to transfer the data units therein sequentially to the discharge means 6, 20, 114, 115, 116, 117.

11. A device as claimed in either of claims 9 or 10 characterised in that means 10, 103 are provided for converting the signals from an analog to a digital form.

12. A device as claimed in any one of claims 9 to 11 characterised in that the memory unit 105 comprises a dynamic RAM 105.

13. A device as claimed in claim 12 characterised in that the RAM 105 is a dual port Video-RAM 105 which also incorporates a shift register 114 to receive data packets from the RAM 105.

INPUT SIGNAL
A

SYNCHRONISATION
PORTION

Fig. 1

EP 0 356 200 A1

Fig. 2

SCRAMBLED VIDEO

BURST DETECT

BURST GATE

SUBCARRIER OSCILLATOR

3 X SUBCARRIER OSCILLATOR (PHASELOCK LOOP) — 101

$3f_{SC}$ CLOCK

H → V → TIMING GENERATOR — 102

X ↓ TIMING PULSES

SYNC. SEPARATOR — 100

HORIZONTAL SYNC.
VERTICAL SYNC.
VIDEO CLAMP

VIDEO A TO D CONVERTOR — 103

$D_0-D_7$ DIGITISED VIDEO

BUFFER MEMORY — 104

$D_0-D_7$

OPTIONAL BYPASS FOR SYNC. AND COLOUR BURST

DUAL PORT V-RAMS — 105

SERIAL SHIFT REGISTER — 114

$D_0-D_7$

ROW/COLUMN ADDRESS

VIDEO D TO A CONVERTOR — 115

LOW PASS FILTER — 116

117

Y →

X ↓

UNSCRAMBLED VIDEO

106
$3f_{SC}$ → COLUMN COUNTER

107 → MUX VIDEO COLUMN

110
H → ROW COUNTER

108 → LOOK-UP TABLE

109 → MUX VIDEO ROW

111
X → AUDIO SAMPLE COUNTER

112 → MUX AUDIO COLUMN

113 → MUX AUDIO ROW

118
2 BYTE BUFFER

119
AUDIO D TO A CONVERTOR

120
LOW PASS FILTER

AUDIO OUTPUT

2 AUDIO SAMPLES TAKEN FROM THE AUDIO ROW AT THE START OF EACH NEW TV LINE

EP 0 356 200 A1

European Patent
Office

# EUROPEAN SEARCH REPORT

Application number

| | DOCUMENTS CONSIDERED TO BE RELEVANT | | EP 89308498.8 |
|---|---|---|---|

| Category | Citation of document with indication, where appropriate, of relevant passages | Relevant to claim | CLASSIFICATION OF THE APPLICATION (Int. Cl.X) 5 |
|---|---|---|---|
| A | EP - A1 - 0 156 428<br>(TELECOMMUNICATIONS RADIOELECTRIQUES ET TELE-PHONIQUES)<br> * Page 2, lines 17-26 *<br> * Fig. 1; page 3, line 22 - page 4, line 8 * | 1<br><br><br><br>9,11 | H 04 N 7/167<br>H 04 K 1/00 |
| D,A | GB - A - 1 590 579<br>(MICRO CONSULTANTS LTD.)<br> * Page 6, lines 11-15 *<br> * Fig. 3; page 5, lines 27-31 * | 1,2<br><br>9,11 | |
| A | EP - A1 - 0 127 381<br>(M/A-COM LINKABIT)<br> * Fig. 3; page 12, line 6 - page 14, line 4 * | 1,2,9,11 | |
| A | US - A - 4 266 243<br>(SHUTTERLY)<br> * Abstract; fig. 1 * | 1,7 | TECHNICAL FIELDS SEARCHED (Int. Cl.X) 5 |
| A | US - A - 4 620 224<br>(LEE)<br> * Column 6, line 62 - column 7, line 9 * | 8 | H 04 N 7/00<br>H 04 K 1/00 |
| A | WO - A1 - 86/07 226<br>(SCIENTIFIC ATLANTA)<br> * Page 23, claims 19,21; page 24, claims 22,24 *<br> ---- | 8 | |

The present search report has been drawn up for all claims

| Place of search | Date of completion of the search | Examiner |
|---|---|---|
| VIENNA | 07-11-1989 | BENISCHKA |